# EUROPEAN PATENT APPLICATION

(11) **EP 2 383 086 A1**
(43) Date of publication of application: **02.11.2011**
(21) Application number: 10161411.3
(22) Date of filing: 29.04.2010
(51) Int. Cl.: B27N 1/00, C08L 3/02, C08L 97/02

(54) **Method for manufacturing and shaping environment-conservative plant fiber as substitute for wood, paper, and plastics**

(71) Applicant: Hung, Yih-Shan, Kaohsiung County 814 (TW); Tsai, Ching-Chi, Kaohsiung City 813 (TW)
(72) Inventor: Chen,, Chih-Heng, Cambridge, CB1 1AH (GB)
(74) Representative: Horak, Michael

(57) **Abstract**

Disclosed is a method for manufacturing environment-conservative plant fiber as substitute for wood, paper, and plastics, which includes the steps of having agricultural surpluses and/or plant wastes ground and then mixed with starch, a plasticizer, and additives according to desired percentages by using a high speed mixing machine, deposited into a dual screw machine for pressurization and blending, pulverized by a pulverization machine, processed by an extrusion machine, subjected to temperature control by using a mold temperature controller, and then deposited in a cooling system for cooling and pelletization by airstreams to complete workable environment-conservative plant fiber particles. The particles can be used to substitute wood, paper, and plastics for making various products. The manufacturing process of the method releases completely no waste water and waste gas. The products made of the particles are completely recyclable for re-use. Environmental conservation and reduction of energy consumption can be realized.

## Description

### (a) Technical Field of the Invention

The present invention generally relates to a method for manufacturing and shaping environment-conservative plant fibers as substitute for wood, paper, and plastics, and more particularly to a method for manufacturing plant fibers as substitute for wood, paper, and plastics by using various agricultural surpluses and/or plant wastes.

### (b) Description of the Prior Art

With the progress of industrial technology, plastic and paper-made objects are commonly used for their being inexpensive and easy to use. However, plastics are not naturally decomposable and incineration of plastics may release harmful gases, which cause pollution to the natural environment. In respect of paper or pulps, the great demand of wood or pulps occurring recently causes mass destruction of woods and forests. Due to the fact that forestation is generally very slow, the supply of wood can hardly meet the demand of wood and pulps. Consequently, the destruction or logging of forest eventually leads to severe damage to the biological environment, which in turn brings about increase of the contents of carbon dioxides in the atmosphere, increasing the temperature of the Earth and worsening the greenhouse effect of the Earth. Due to such reasons, the plastic industry is putting a great effort to the development of decomposable plastics and for the wood and pulp industry, various recycled and substitute pulps and plywood of different forms are getting attractive for the industry in order to reduce the consumption of natural woods and forests. However, no matter how hard such an effort has been made to help preserve the natural resources, consumption of the natural resources is inevitable. Further, paper recycling processes produces waste water of high alkalinity, which leads to pollution to water resources. Thus, it is desired to have a solution for properly utilizing various wastes to produce environment-conservative material in order to overcome the problems discussed above.

### SUMMARY OF THE INVENTION

The primary objective of the present invention is to provide a method for manufacturing and shaping environment-conservative plant fibers as substitute for wood, paper, and plastics, and more particularly a method for manufacturing fiber particles and products of boards and paper by using various agricultural surpluses and/or plant wastes so as to realize the purposes of environmental conservation and reduction of energy consumption.

According to the present invention, a method for manufacturing environment-conservative plant fiber as substitute for wood, paper, and plastics comprises grinding agricultural surpluses and/or plant wastes to powders and added with starch, a plasticizer, and additives, wherein the agricultural surpluses and/or plant wastes take a percentage of 63-73 %, the starch takes a percentage of 15%-20%, the plasticizer takes a percentage of 7%, and the additives take a percentage of 5%-10%. The method comprises the steps of mixing the powders of the agricultural surpluses and/or plant wastes with the starch, the plasticizer, and the additives according to desired percentages for sufficient mixture by using a high speed mixing machine, deposited into a dual screw machine for pressurization and blending, pulverized by a pulverization machine, processed by an extrusion machine, subjected to temperature control by using a mold temperature controller to a temperature within the range of 160-180°C, and then deposited in a cooling system for cooling to complete workable environment-conservative plant fiber particles. The workable plant fiber particles can be processed by an extruding machine of an injection molding machine to form lumbers, boards, and paper for making various products for substituting plastics, wood, and paper, including angles and boards for indoor decoration, or corrugated paper box, or can be processed by a vacuum molding machine to form package boxes for internal and external uses, or alternatively, the workable plant fiber particles can be directly processed by an injection molding machine to form various plastic substitute products to have the workable plant fiber particles replacing plastics, wood, and paper in making various product. As such, effects of environmental conservation and reduction of energy consumption can be realized.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

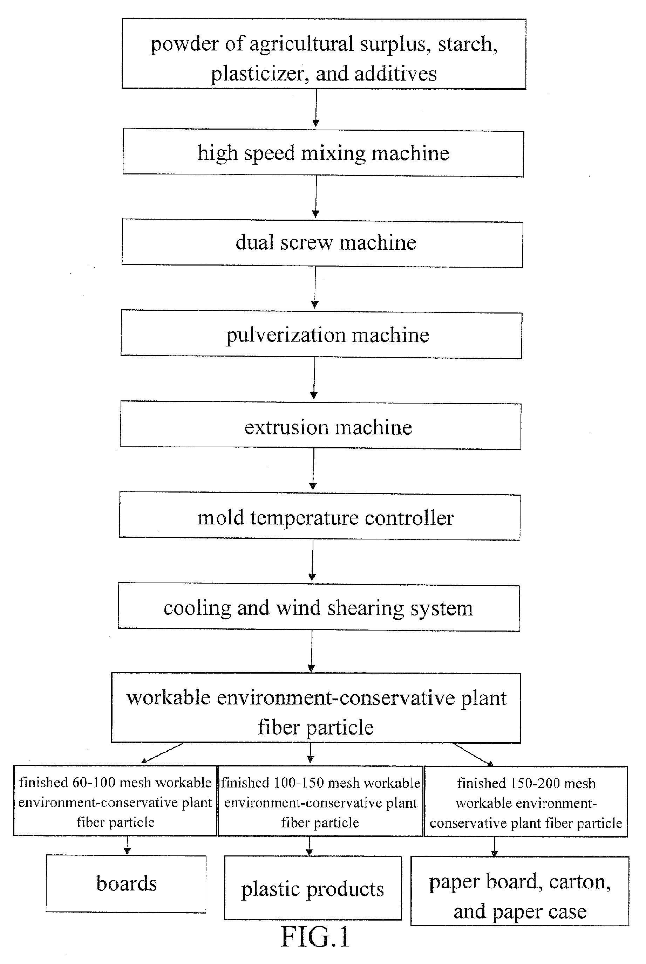

FIG 1 is a block diagram showing a flow chart of a method according to the present invention.

### DETAILED DESCRIPTION OF THE PREFERRED EMBODIMENTS

The following descriptions are exemplary embodiments only, and are not intended to limit the scope, applicability or configuration of the invention in any way Rather, the following description provides a convenient illustration for implementing exemplary embodiments of the invention. Various changes to the described embodiments may be made in the function and arrangement of the elements described without departing from the scope of the invention as set forth in the appended claims.

Referring to FIG 1, the present invention provides an environment-conservative plant fiber to substitute the conventionally used wood, paper. According to the present invention, agricultural surpluses and/or plant wastes are used and subjected to pulverization or cutting to pieces, and are then ground to a powder form that is mixed with starch, plasticizer, and additives for subsequent processing with various processes. The agricultural surpluses as used herein include, but not limited to, rice grains, wheat grains, coconut husks, bagasses, and the likes. The plant wastes include, but not limited to, wood chips, branches, leaves, toxicant-free wooden furniture and pallets, and the likes. Starch used in the present invention includes industrial starch. Plasticizer is plasticizing particles. Additives include dispersing agent, bonding agent, and resins. The agricultural surpluses or plant wastes take a percentage of 63%-73%; starch takes a percentage of 15%-20%, plasticizer takes a percentage of 7%, and the additives are of a percentage of 5%-10%. The process of manufacturing includes the following steps. The agricultural surpluses and/or plant wastes are first ground to 60-200 mesh, mixed with starch, plasticizer and additives with a desired ratio in a fully mixed manner, according to the types of product, by using for example a high speed mixing machine to provide a viscous form, deposited into a dual screw machine for pressurization and blending for complete mixture in a high temperature and high pressure, extruded to form a bar shape or a pellet shape, pulverized by a pulverization machine, processed by an extrusion machine, subjected to temperature control by using a mold temperature controller to a temperature within the range of 160-180°C, and then deposited in a cooling system for cooling and pelletization by airstreams to complete workable environment-conservative plant fiber particles.

For workable plant fiber particles formed of agricultural surpluses and/or plant wastes that are ground to 60-100 mesh according to the present invention, they can be subjected to a process of extrusion directly using an extrusion machine and feeding through a mold temperature controller and a cooling system for direct manufacture of lumbers and boards, or can be used to manufacture various wood substitute materials, such as angles and boards used in indoor decoration or handrail of stairways, furniture, plywood boards, and medium density fiber (MDF) boards. Further, the plant fiber lumbers or boards of the present invention contains no formaldehyde and can be used to replace high-end lumbers, boards, and furniture for indoor decoration made in an environmentally conservative manner. Further, fire retardants can be added to manufacture fire-proof construction materials.

For workable plant fiber particles formed of agricultural surpluses and/or plant wastes that are ground to 100-150 mesh according to the present invention, they can be subjected to a process of injection molding directly using an injection molding machine to make various plastic substitute products, including toothbrush handles, combs or disposable products, such as blood lancets, pregnancy test sticks, and barrels of ballpoint pens.

For workable plant fiber particles formed of agricultural surpluses and/or plant wastes that are ground to 150-200 mesh according to the present invention, they can be used to make paper board, cartons, and paper cases, or can be subjected to a process by using vacuum molding machine to form various package boxes for internal and external uses and various paper products, such as paper slippers, corrugated paper cases, inner linings for electronic products, inner linings for footwear, inner linings for clothing packing, and the likes.

These products of the present invention can be directly used to replace wood, paper, and plastics so that they meet the needs for environmental conservation. Further, most of the raw materials are agricultural surpluses and/or plant wastes that are generally of no further use so that waste of resources can be reduced, providing an effect of reduction of energy consumption. Most importantly, the manufacturing process of the present invention generates and releases no waste water and waste gas and thus causes no pollution to water resources and the natural environment. Further, the products made of materials according to the present invention are completely recyclable for re-use.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A method for manufacturing environment-conservative plant fiber as substitute for wood, paper, and plastics, comprising processing a raw material that is formed of powders of agricultural surpluses and/or plant wastes added with starch and additives, wherein the agricultural surpluses and/or plant wastes take a percentage of 63-73%, the starch takes a percentage of 15%-20%, and the additives take a percentage of 5%-10%, a plasticizer being further added in a percentage of 7%, the method comprising the steps of the agricultural surpluses and/or plant wastes being ground and then mixed with the starch, the plasticizer, and the additives according to desired percentages by using a high speed mixing machine, deposited into a dual screw machine for pressurization and blending, pulverized by a pulverization machine, processed by an extrusion machine, subjected to temperature control by using a mold temperature controller to a temperature within the range of 160-180°C, and then deposited in a cooling system for cooling and pelletization by airstreams to complete workable environment-conservative plant fiber particles.

2. The method according to claim 1, wherein the agricultural surpluses and/or plant wastes are ground to 60-100 mesh, and are then directly subjected to extrusion by an extruding machine to make lumbers, angles, and boards.

3. The method according to claim 1, wherein the agricultural surpluses and/or plant wastes are ground to 100-150 mesh, and are then directly subjected to injection molding by an injection molding machine to make plastic substitute products.

4. The method according to claim 1, wherein the agricultural surpluses and/or plant wastes are ground to 150-200 mesh, and are then used to make paper boards, cartons, and paper cases or are processed by a vacuum molding machine to form packages boxes for internal and external uses.
